# EUROPÄISCHE PATENTSCHRIFT

(11) **EP 2 469 492 B1**
(45) Veröffentlichungstag und Bekanntmachung des Hinweises auf die Patenterteilung: **29.05.2013**
(21) Anmeldenummer: 11189682.5
(22) Anmeldetag: 18.11.2011
(51) Int. Cl.: G08B 17/107, G08B 29/18, G01N 21/53

(54) **Verfahren und Vorrichtung zur Branddetektion in Volumina**
Method and device for fire detection in volumes
Procédé et dispositif destinés à la détection d'incendie dans des volumes

(30) Priorität: 29.11.2010 DE 102010052611
(43) Veröffentlichungstag der Anmeldung: 27.06.2012
(73) Patentinhaber: Minimax GmbH & Co. KG, 23840 Bad Oldesloe (DE)
(72) Erfinder: Rußwurm, Manfred, 23611 Bad Schwartau (DE); Mendle, Thomas, 23669 Timmendorfer Strand (DE); Westphal, Torsten, 23562 Lübeck (DE); Klischat, Olaf, 23869 Elmenhorst (DE); Lenkeit, Kurt, Dr., 23867 Sülfeld (DE); Ziems, Bernd, 23619 Zarpen (DE); Dittmer, Hauke, 23769 Fehmarn (DE)
(74) Vertreter: Lüdtke, Frank

(56) Entgegenhaltungen:
- EP-A1- 1 638 062
- EP-A2- 1 006 500
- WO-A1-98/46978
- WO-A1-03/069571
- DE-A1- 3 237 021

## Beschreibung

Die Erfindung betrifft ein Verfahren zur Branddetektion in Volumina entsprechend dem Oberbegriff des ersten Patentanspruches und eine Vorrichtung zur Branddetektion entsprechend dem Anspruch 9.

Vorrichtung und Verfahren zur Branddetektion in Volumina sind geeignet für Lagerräume, Silos, Bunker und andere Behältnisse, die u.a. den Explosionsschutz-Richtlinien unterliegen und aus denen Luft abgesaugt, auf brandtypische Kriterien überprüft und ggf. ein Brandalarm ausgelöst wird.

Die Erfindung ist besonders geeignet für Volumina wie Silos oder Bunker für brennbare und/oder staubentwickeinde Schüttgüter oder Lagerbereiche für brennbare Materialien, aus denen Luftproben entnommen werden müssen, um daraus gewonnene Brandkenngrößen zur Erzeugung eines Brandalarmes zu nutzen.

Volumina im Sinne der Erfindung können Silos oder Bunker sowie andere Lagerbereiche und Transportbereiche sein, die den Explosionsschutzanforderungen unterliegen und in denen leicht brennbares Material und staubentwickeinde Schüttgüter wie Holzspäne, Holzschnitzel, Holzpellets, Getreide, Lebensmittelpulver Futtermittel, Düngemittel oder anderes gelagert oder transportiert werden. Durch entsprechend hohe Staubkonzentrationen dieser Materialien kann es zu einem explosionsfähigen Luft-Staub-Gemisch kommen. Zündquellen können dann z.B. warme oder heiße Bauteile oder Oberflächen sein. Im Nachfolgenden werden diese Volumina auch Lagerbereiche genannt. Diese Lagerbereiche/Volumina, die den Explosionsschutzanforderungen unterliegen, werden im Weiteren auch kurz Ex-Bereiche genannt. Unter Staub sind im Weiteren kleine Partikel der Materialien, die gelagert oder transportiert/geschüttet werden zu verstehen.

Hauptsächlich stellen Austrags-, Förder- oder Aufbereitungsvorrichtungen dabei potenzielle Zündquellen dar. Durch Reibung oder Überhitzung des Fördergutes im Bereich der Austragsschnecken, kann in einem Silo oder einem Lagerbereich unbemerkt ein tiefliegender Schwelbrand entstehen. Auch von außen über die Eintragsöffnung eingebrachte Zündinitiale stellen ein Brandpotenzial dar. Weiterhin kann es in Materialschüttungen durch biologische Zersetzungsprozesse zur Selbstentzündung kommen. Ein so entstandener Schwelbrand kann sich bis zur Oberfläche der Materialschüttung ausdehnen und dort durch Sauerstoffzufuhr schnell zu einem offenen Feuer entwickeln, der den gesamten Lagerbereich oder die Maschine zerstört. Die Schwierigkeit der Detektion von Entstehungsbränden innerhalb von Lagerbereichen, Bunkern oder Silos besteht darin, dass ein hoher Anteil von Feinstaub-, Kohlenmonoxid oder oftmals eine hohe relative

Luftfeuchtigkeit vorhanden sind. In solchen Ex-Bereichen bestehen große Probleme bei der Brandfrüherkennung. Herkömmliche Branderkennungssysteme ohne technische Änderungen und ohne Zulassung für den Einsatz in Ex-Bereichen sind hier nicht einsetzbar.

Branderkennungssysteme wie z.B. Rauchansaugsysteme mit Sensoren/Detektoren zur Branderkennung, die zur Überwachung in Ex-Bereichen eingesetzt werden, müssen den Anforderungen an den Explosionsschutz unterliegen, z.B. den Normenreihen EN 60079 oder IEC 60079 oder den jeweiligen nationalen Anforderungen wie z.B. NEC500 bis NEC 516. Solche Systeme dürfen keine Teile aufweisen, die sich so erwärmen können, dass Zündquellen entstehen

Vorrichtungen die diesen Anforderungen entsprechen sind durch entsprechende nationale Zertifizierungsstellen zu prüfen und zu zertifizieren. Sie gelten dann als Vorrichtungen oder Geräte mit Ex-Zulassung für bestimmte, klassifizierte Ex-Zonen wie z.B. Zone 20, 21 oder 22. Geräte mit Ex-Zulassung sind technisch aufwendiger und erfordern erhöhte Kosten im Vergleich zu Standardgeräten.

WO 03/069571 zeigt einen Branddetektor mit Absangleitungen bei dem eine Selektion der Leitung mit dem größten Luftluss stattfindet.

In EP 1 542 188 B1 wird eine Vorrichtung und ein Verfahren zum Detektieren von Entstehungsbränden beschrieben, mit der aus Räumen oder von elektrischen Geräten kontinuierlich Raumluft bzw. Geräteproben abgesaugt und nach Branderkennungsgrößen detektiert werden. Um den abzusaugenden Luftstrom zu steuern weist die Ansaugöffnung eine vorgegebene Größe und Form auf.

Der Filter dient dazu, Staubkonzentrationen gering zu halten. Eine Überwachung des Filters auf Defekte und eine Überwachung des Luftstromes auf Überschreiten der Explosionsgrenze ist nicht vorgesehen.

DE 197 81 749 T5 beschreibt ein System zur Überwachung der Funktionsfähigkeit eines Staubfilters einer Brandmeldeanlage im nicht explosionsgefährdeten Bereich auf Verstopfung des Filters, wobei bei Überschreiten eines bestimmten Schwellenwertes ein Warnsignal erzeugt wird, nach dem der Filter ersetzt wird.

DE 101 25 687 B1 beschreibt eine Vorrichtung zum Detektieren von Brandherden oder Gasverunreinigungen in einem oder mehreren Überwachungsräumen mit einem Hauptdetektor zum Detektieren einer Brandkenngröße oder einer Gasverunreinigung, der über eine in jedem Überwachungsraum angeordneten und mit Ansaugöffnung versehene Rohrleitung mittels einer Ansaugeinheit verbunden ist.

Insbesondere zur kostengünstigen Branddetektion in Volumina, die den Explosionsschutzanforderungen unterliegen, sind oben genannte Vorrichtungen nicht geeignet und nicht erlaubt.

Für Branddetektionsgeräte wie z.B. Rauchansaugsysteme ohne Ex-Zulassung, die Luft aus derartigen Volumina ansaugen und analysieren muss sichergestellt sein, dass die Staubkonzentration des angesaugten Luft-Staub-Gemisches im Rauchansaugsystem unter der Grenze einer maximal möglichen Konzentration für eine explosionsfähige Atmosphäre liegt.

Aufgabe der Erfindung ist es daher, ein Verfahren und eine Vorrichtung zur Branddetektion aus Volumina zu entwickeln, die den Explosionsschutzanforderungen entspricht, ohne dass ein explosives Luft-Staub-Gemisch in das Branddetektionssystem gelangt, wobei ein Verschleppen der explosiven Atmosphäre aus dem Ex-Bereich in das Branddetektionssystem verhindert und der Einsatz von kostengünstigen Branddetektionssystemen, die nicht den Anforderungen für explosionsgefährdete Bereiche entsprechen, ermöglicht werden soll.

Diese Aufgabe wird durch ein Verfahren nach den Merkmalen des ersten Patentanspruches und eine Vorrichtung nach den Merkmalen des Anspruches 9 gelöst.

Unteransprüche geben vorteilhafte Ausgestaltungen der Erfindung wieder.

Die erfindungsgemäße Lösung sieht ein Verfahren und einen Vorrichtung zur Branddetektion in Volumina, wie Materiallager, Silos, Bunker oder ähnlichem vor, die den Explosionsschutzanforderungen unterliegen und aus denen ein Luft-Staub-Gemisch, welches Brandkenngrößen im Luftstrom enthalten kann, abgesaugt werden.

Unter Brandkenngrößen werden alle Kenngrößen wie z.B. Rauch, Wärme und Flammenstrahlung sowie Brandgase verstanden, die einen entstehenden oder ausgebrochenen Brand kennzeichnen. Sie beruhen auf der Messung physikalischer Meßgrößen wie Temperatur, elektromagnetische Strahlung, der Lichtstreuung an Rauchaerosolen oder dem Nachweis von Brandgasen wie z.B. CO, NOx oder längerkettigen Kohlenwasserstoffen oder anderer schwelbrandkennzeichnender Stoffe.

Die Absaugung des Luft-Straub Gemisches erfolgt mit einem Rauchansaugsystem, welches keine Zulassung für den Einsatz in Ex-Bereichen hat.

Ein Rauchansaugsystem ist ein Branddetektionssystem, welches Luft aus einem zu überwachenden Bereich absaugt. Es enthält mindestens einen, in der Regel mehrere Sensoren zur Branddetektion. Es kann auch Brandgassensoren enthalten. Weiterhin sind u.a. Komponenten zur Überwachung des Luftstromes und Erzeugung eines Alarmsignals sowie eine Signalverarbeitungseinheit und ein Sauglüfter Bestandteil des Rauchansaugsystems. Anstelle des Sauglüfters kann auch im System eine Pumpe verwendet werden.

Sauglüfter oder Pumpe können auch außerhalb des Rauchansaugsystems betrieben werden.

Aus den auf Brand zu überwachenden Volumina, die einen Ex-Bereich darstellen wird ein Luft-Staub-Gemisch über eine Saugrohrleitung durch ein Rauchansaugsystem über ein Filter abgesaugt. Der Filter hat die Funktion die Staubkonzentration des angesaugten Luft-Staub-Gemisches im Rauchansaugsystem unter die Explosionsgrenze zu senken.

Entscheidend für die Erfindung ist, dass zwischen dem Lagerbereich für die brennbaren Materialien (Ex-Bereich) und dem Rauchansaugsystem, welches keine Zulassung für den Einsatz in explosionsgefährdeten Bereichen hat und im nicht Ex-Bereich ohne explosionsfähige Atmosphäre angeordnet ist, eine Filterüberwachungseinheit mit einem Störungsüberwachungssensor angeordnet ist. Vorzugsweise ist der Störungsüberwachungssensor am Filter oder in unmittelbarer Nähe positioniert.

Der Störungsüberwachungssensor überwacht kontinuierlich die Funktionsfähigkeit des Filters. Eine Störung des/der Filters liegt dann vor, wenn beispielsweise eine unzulässig hohe Konzentration Staub im Luftstrom hinter dem Filter vorhanden ist. Dies kann durch Leckagen im Filter oder durch eine Zerstörung des Filters passieren. Im Weiteren wird dies als Zerstörung des Filters bezeichnet.

Mit der Filterüberwachungseinheit wird das Ansteigen der Staubkonzentration im angesaugten Luftstrom hinter dem Filter durch Überschreiten vorgegebener Grenzwerte der Staubkonzentration oder der Anstiegsänderung feststellt und registriert und ein Störungssignal erzeugt.

Der Störungsüberwachungssensor ist mit einer Signalverarbeitungseinheit verbunden, die gespeicherte Grenzwerte von zündfähigen Staubkonzentrationen und/oder Vorwarnschwellwerten und/oder Anstiegswerten enthält.

Unter Signalverarbeitungseinheit wird eine signalverarbeitende und steuernde Einheit mit Speicher verstanden. Vorteilhafterweise ist dies die Signalverarbeitungseinheit des Rauchansaugsystems. Sie kann auch separat vom Rauchansaugsystem in die Filterüberwachungseinheit integriert sein.

Der Grenzwert für eine explosionsfähige Holzstaubkonzentration liegt beispielsweise oberhalb von 30 g Staub pro Kubikmeter Luft bei entsprechender Partikelgrößenverteilung. Es kann aber auch vorteilhaft sein, Grenzwerte unterhalb der explosionsfähigen Konzentration, z. B. bei Erreichen von Vorwarnschwellwerten bei 90%, oder 80% oder 70% der explosionsfähigen Staubkonzentration festzulegen.

Weiterhin ist es vorteilhaft Grenzwerte für Anstiegesänderungen der Staubkonzentration, insbesondere bei sprunghaftem Anstieg zu verwenden. Ein sprunghafter Anstieg der Staubkonzentration ist dann messbar, wenn eine plötzliche Leckage im Filter oder ein lokaler oder kompletter Durchbruch erfolgt ist. Dies wird als Störung betrachtet, die Funktionsfähigkeit des Filters ist dann nicht mehr gegeben.

Es kann vorteilhaft sein, eine Kombination der Konzentrationsgrenzwerte und der Grenzwerte der Anstiegsänderung zur Generierung des Störungssignals zu nutzen.

Wird durch den Störungsüberwachungssensor und die Signalverarbeitungseinheit die Überschreitung vorgegebener Grenzwerte gemessen und festgestellt, so wird ein Störungssignal erzeugt. Dieses Störungssignal zeigt den Verlust der Funktionsfähigkeit des Filters an. Zur Vereinfachung werden im Weiteren die Begriffe Störungssignal des Störungsüberwachungssensors oder der Filterüberwachungseinheit verwendet, was gleichzusetzen ist mit der Signal- und Messwertanalyse des Störungssensors durch eine Signalverarbeitungseinheit und dem Vergleich mit den gespeicherten Grenzwerten durch die Signalverarbeitungseinheit und die Erzeugung des Störungssignals durch diese.

Bei Zerstörung des Filters wird ein Signal (Störungssignal) des

Störungsüberwachungssensors erzeugt, welches Folgeaktionen einleitet, die ein Eindringen des angesaugten Luft-Staub-Gemisches mit erhöhter zündfähiger Staubkonzentration in das Rauchansaugsystem verhindert.

So ist es vorteilhaft, dass das Störungssignal der Filterüberwachungseinheit den Sauglüfter im Rauchansaugsystem und/oder das gesamte Rauchansaugsystem ausschaltet, so dass keine Luft mehr aus dem zu überwachenden Volumina abgesaugt wird. Dieses Abschalten verhindert eine Verschleppung eines möglichen explosiven Gemisches in Bereiche, in denen es zu einer unkalkulierbaren Gefahr werden könnte. Insbesondere wird das Eindringen eines zündfähigen Luft-Stabgemisches in das Rauchansaugsystem verhindert. Elektrische Betriebsmittel wie Rauchansaugsysteme, welche keine Zulassung für den Einsatz in Ex-Bereichen haben, können Zündquellen enthalten, z.B. zündfähige warme Oberflächen.

Es ist weiterhin vorteilhaft, dass die Länge der Saugrohrleitung zwischen Filter und Eintritt in das Rauchansaugsystem so berechnet und bemessen wird, dass nach Abschaltung des Sauglüfters oder des gesamten Rauchansaugsystems die Transportgeschwindigkeit des angesaugten Luft-Staub-Gemisches in der Saugrohrleitung vor Eintritt in das Rauchansaugsystem auf Null m/s reduziert wird. Dies verhindert das Eindringen einer explosionsfähigen Atmosphäre in das Rauchansaugsystem.

Es ist weiterhin vorteilhaft dass das Störsignal der Signalverarbeitungseinheit eine oder mehrere Klappen und/oder ein oder mehrere Ventile ansteuert, welches das angesaugte Luft-Staub-Gemisch am Eintritt in das Rauchansaugsystem verhindert. Eine vorteilhafte Ausführung ist hierbei die Ansteuerung eines Ventils oder einer Klappe, welche das Rauchansaugsystem luftstrommäßig von der Saugrohrleitung trennt und/oder das abgesaugte Luft-Staub-Gemisch aus der Saugrohrleitung in die Umgebung oder einen Behälter leitet. Als Ventil kann ein 3/2-Wege-Ventil angeordnet sein.

In einer weiteren Ausgestaltungsvariante des Verfahrens steuert das Signal des

Störungsüberwachungssensors eine Klappe oder ein Ventil an welches das angesaugte Luft-Staub Gemisch durch eine zusätzliche Beimischung von unbelasteter Luft oder Gas verdünnt oder durch Beimischung eines inertisierenden Gases die Explosionsgrenze im Volumen des Rauchansaugsystems senkt, was eine Weiterführung der Detektion von Brandkenngrößen ermöglicht.

Es kann vorteilhaft sein die Umleitung des angesaugten Luft-Staub-Gemisches und/oder den Verschluss des Eintritts der Saugrohrleitung in das Rauchansaugsystem mit der Abschaltung zu kombinieren.

Es kann weiterhin vorteilhaft sein, die Klappe oder das Ventil in die

Filterüberwachungseinheit, die austauschbar sein kann, zu integrieren.

Das Feststellen des Überschreitens einer gefahrbringenden Konzentration ist für den Fachmann durch unterschiedliche Möglichkeiten denkbar, von denen hier nur einige aufgeführt werden. Es handelt sich dabei meist um Messverfahren, deren Messwerte in zeitlicher Abhängigkeit miteinander verglichen werden und deren Abweichungen die Nutzsignale für den Störungsüberwachungssensor darstellen. Der Störungsüberwachungssensor ist der Umsetzer in eine Reaktion für eine Abweichung eines Messwertes.

Vorteilhaft ist es, die Staubkonzentration des Gasstromes mittels eines Durchlicht- oder eines Streulichtsystems zu überwachen. Dabei kann das Durchlicht- oder das Streulichtsystem mit UV-Licht, sichtbaren Licht oder IR-Strahlung durchgeführt werden. Um das Streulicht- oder das Durchlichtsystem funktionsgerecht zu überwachen, können die Vorrichtungen bei optischer Verschmutzung automatisch nachgeregelt werden.

Weiterhin ist es vorteilhaft, die Optik des Durchlicht- oder Streulichtsystems automatisch zu reinigen. Das kann beispielsweise mit einer Luftspülungsvorrichtung erfolgen.

Weiterhin ist es vorteilhaft, die Staubkonzentration des Gasstromes mittels eines Mikrowellensystems zu überwachen.

Vorteilhaft ist es, dem Filter einen Abscheider nachzuschalten.

Eine andere Lösungsvariante besteht darin, die Staubkonzentration des Gasstromes mittels Abscheider zu überwachen, der den anfallenden Staub separiert, so dass die angefallene Staubmenge pro Zeiteinheit überwacht werden kann. Sofern diese zu hoch ist, wird ein Signal ausgelöst, d.h. der Störungsüberwachungssensor veranlasst die Abschaltung des Sauglüfter im Rauchansaugsystem und/oder des gesamten Detektionssystems. Die nach dem Filter angefallene Staubmenge kann gewogen aber auch mittels Füllstandsanzeige optisch oder Laserniveaumessung ermittelt werden.

Eine andere Möglichkeit, die Staubkonzentration im Gasstrom zu messen, besteht darin, eine elektrostatische Überwachungseinheit anzuordnen.

Vorteilhaft ist es weiterhin, aus dem Luft-Staub-Gemisch mittels Filtervorgang oder durch einen Abscheider Flüssigkeit abzuscheiden.

Weiterhin ist es vorteilhaft, dass gefilterte Luft-Staub-Gemisch dem Volumina für brennbare Materialien wieder zuzugeben.

Weiterhin ist es vorteilhaft, wenn der Sensor zum Detektieren einer Brandkenngröße mit einem Alarmgerät und/oder einer Löschanlage verbunden ist, so dass sofort ein Löschen erfolgen kann.

Die erfindungsgemäße Lösung hat den Vorteil, dass Volumina wie Materiallager, Silos oder Bunker für brennbare Materialien, die den Explosionsschutzanforderungen unterliegen, auf brandtypische Kriterien überwacht werden können, ohne dass die maximal mögliche Konzentration für eine explosionsfähige Atmosphäre überschritten wird, da für diesen Fall die Anlage automatisch abschaltet oder alternative Folgeaktionen eingeleitet werden, so dass kein explosionsfähiges Luft-Staub-Gemisch in das Rauchansaugsystem gelangen kann . Damit ist die Branddetektion mit kostengünstigen Standardkomponenten, ohne Zulassung für die Anwendung in explosionsgefährdeten Bereichen, aus Volumina möglich, die den Explosionsschutzanforderungen unterliegen.

Im Folgenden wird die Erfindung an einem Ausführungsbeispiel mit mehreren Umsetzungsvarianten und 6 Figuren näher erläutert.

Die Figuren zeigen:
- Figur 1:: Vorrichtung zur Branddetektion in einem Ex-Bereich in schematischer Darstellung.
- Figur 2:: Schematische Darstellung einer Vorrichtung zur Branddetektion in einem Ex-Bereich mit einer Filterüberwachungseinheit mit Störungsüberwachungssensor und einem Ventil zur Unterbrechung des Luftstromes zum Rauchansaugsystem.
- Figur 3:: Vorrichtung zur Branddetektion in einem Ex-Bereich in schematischer Darstellung mit dem Störungsüberwachungssensor und der Signalverarbeitungseinheit.
- Figur 4:: Schematische Darstellung der Vorrichtung zur Branddetektion in einem Ex-Bereich mit einem 3/2-Wegeventil zur Abtrennung des Luftstromes zum Rauchansaugsystem und gleichzeitiger Öffnung einer Bypassleitung zur Umleitung des angesaugten Luft-Staub-Gemisches.
- Figur 5:: Schematische Darstellung einer Vorrichtung zur Branddetektion mit einem Abscheider und einem Alarmgerät sowie einem Löschmittelventil.
- Figur 6:: Schematische Darstellung einer Vorrichtung zur Branddetektion in einem Ex-Bereich mit einem Ventil zur Öffnung eines Vorratsbehälters mit inertisierendem Gas.

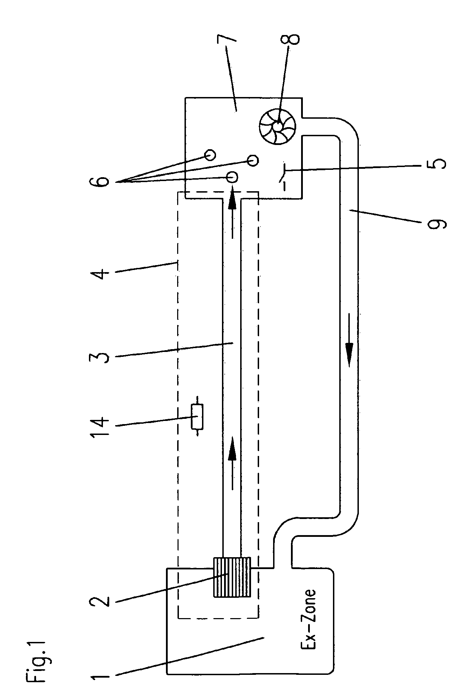

Die *Figur 1* zeigt den Lagerbereich 1 mit brennbaren Stäuben, welches ein Silo darstellt, an dem der Filter 2 angeordnet ist. Dies kann beispielsweise ein Silo für Holzschnitzel, Holzpellets, Holzspäne, Getreide, Futtermittel, Düngemittel oder andere Materialien sein.

Der Filter 2 trennt den Ex-Bereich vom nicht Ex-Bereich. Er sorgt dafür, dass z.B. bei Lagerung oder Transport von Holzteilchen (Holzschnitzel, Holzpellets, Holzspäne u.a.) eine Konzentration von beispielsweise 30 g Holzstaub pro Kubikmeter Luft für eine bestimmte Partikelgrößenverteilung nicht überschritten wird. Das Feststellen des Versagens der Funktion des Filters 2 durch Zerstörung oder Durchbruch, was ein Überschreiten der Zündgrenze des abgesaugten Luft-Staub-Gemisches zur Folge haben könnte, muss gewährleistet werden. Deshalb wird der Filter 2 mittels der Filterüberwachungseinheit 4 überwacht, welche einen Störungsüberwachungssensor 14 und eine Signalverarbeitungseinheit (nicht gezeigt) enthält.

Das Luft-Staub-Gemisch wird über den Filter 2 und die Saugrohrleitung 3 durch den Sauglüfter 8 angesaugt, der sich im Rauchansaugsystem 7 befindet. Um Brandkenngrößen zu ermitteln sind ein oder mehrere Sensoren 6 zur Detektion von Brandkenngrößen im Rauchansaugsystem 7 angeordnet. Im vorliegenden Fall sind drei verschiedene Sensoren 6 angeordnet, die unterschiedliche Brandkenngrößen detektieren. Das überwachte Luft-Staub-Gemisch wird mittels Luftstromrückführleitung 9 in den Lagerbereich 1 für brennbare Stäube zurückgeführt. Sofern die Druckverhältnisse es erfordern, kann durch zusätzliche geeignete Maßnahmen, wie beispielsweise Rückschlagventile, die Strömungsrichtung vom Rauchansaugsystem 7 zum Lagerbereich 1 sichergestellt werden (nicht dargestellt).

Ein Brandalarm wird ausgelöst, sobald durch einen oder mehrere Sensoren 6 eine Brandkenngröße ermittelt wird.

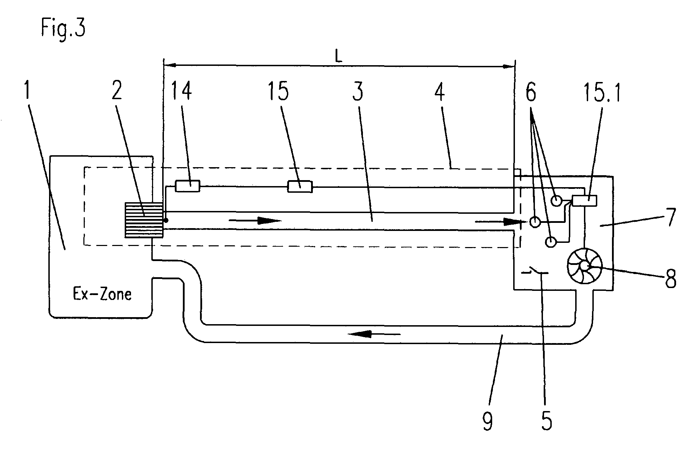

In dieser beispielhaften Ausführung ist die Eintrittsöffnung der Saugrohrleitung 3 direkt mit dem Filter 2 verbunden. Vorteilhaft ist, den Störungsüberwachungssensor 14 direkt am Filter 2 im abgesaugten Luft-Staub-Gemisch in der Saugrohrleitung 3 zu positionieren wie das in *Figur* 3 gezeigt ist.

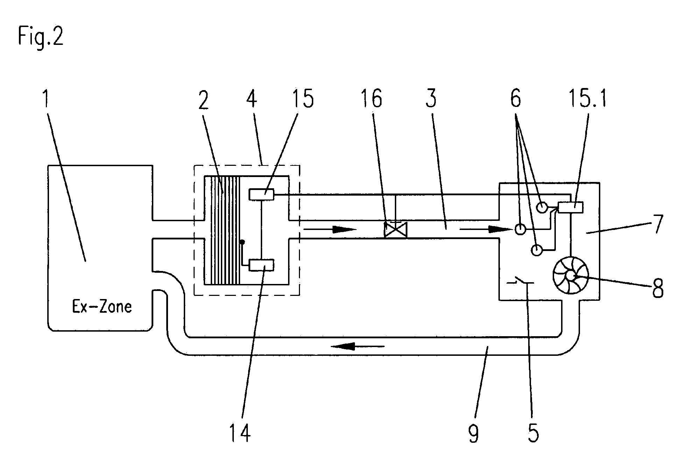

In einer weiteren vorteilhaften Ausführung ist der Filter 2 in der Saugrohrleitung 3 angeordnet oder in einer separaten Filterüberwachungseinheit 4 zwischen dem Ex-Bereich und dem Rauchansaugsystem 7 im abgesaugten Luftstrom was in Fig. 2 dargestellt ist.

Der Filter 2 kann austauschbar sein. Auch der Austausch der gesamten Filterüberwachungseinheit 4 stellt eine Ausführungsvariante dar.

Wesentlich an der Erfindung ist, dass sobald der Störungsüberwachungssensor 14 feststellt, dass der Filter 2 zum Beispiel durch eine Zerstörung oder eine undichte Stelle funktionsunfähig ist, Folgeaktionen eingeleitet werden, so dass das abgesaugte Luft-Staub-Gemisch aus dem Ex-Bereich mit einer erhöhten Staubkonzentration, die auch die Explosionsgrenze überschreiten kann, nicht zu den Sensoren 6 und nicht in das Rauchansaugsystem 7 gelangen kann.

Der Störungsüberwachungssensor 14 ist mit der Signalverarbeitungseinheit 15 verbunden. Diese enthält gespeicherte Grenzwerte von zündfähigen Staubkonzentrationen und/oder Vorwarnschwellwerten und/oder Anstiegswerten. In den in *Fig.* 2 und *Fig.* 3 dargestellten Ausführungsvarianten ist diese Signalverabeitungseinheit 15 separat vom Rauchansaugsystem 7 in der Filterüberwachungseinheit 4 angeordnet.

Es kann aber auch vorteilhaft sein, dass diese Funktion der Signalverarbeitungseinheit 15, durch die Signalverarbeitungseinheit 15.1 des Rauchansaugsystems 7 ausgeführt wird. Diese Variante ist in den Figuren nicht dargestellt.

Der Grenzwert für eine explosionsfähige Holzstaubkonzentration liegt beispielsweise oberhalb von 30 g Staub pro Kubikmeter Luft. Es kann aber auch vorteilhaft sein, Grenzwerte unterhalb der explosionsfähigen Konzentration, z.B. bei Erreichen von Vorwarnschwellwerten bei 90%, oder 80% oder 70% der explosionsfähigen Staubkonzentration festzulegen.

In einer bevorzugten Ausführungsform wird das Störungssignal bei Messung von 80% des Zündgrenzwertes des abgesaugten Luft-Staub-Gemisches oder einer registrierten sprunghaften Staubkonzentrationsänderung erzeugt.

Wird durch den Störungsüberwachungssensor 4 die Überschreitung vorgegebener Grenzwerte gemessen so wird über die Signalverarbeitungseinheit 15 ein Störungssignal erzeugt. Dieses Störungssignal zeigt den Verlust der Funktionsfähigkeit des Filters 2 an.

*Fig.* 2 zeigt eine vorteilhafte Ausführung, in welcher der Störungsüberwachungssensor 14 und die Signalverarbeitungseinheit 15 sowie der Filter 2 in der oben genannten Filterüberwachungseinheit 4 integriert sind.

Bei Zerstörung des Filters 2 leitet das Störungssignal Folgeaktionen ein, die ein Eindringen des angesaugten Luft-Staub-Gemisches mit erhöhter Staubkonzentration in das Rauchansaugsystem 7 verhindert.

In der Ausführung, die schematisch in Fig.2 dargestellt ist, besteht die Folgeaktion im Störungsfall in der Ansteuerung einer Klappe und/oder eines Ventils 16, welche den Luftstromeintritt der Ansaugung in das Rauchsansaugsystem 7 verschließt.

In *Fig.* 3 ist eine Anlage mit dem Störungsüberwachungssensor 4 und der Signalüberwachungseinheit 15 schematisch dargestellt, wobei das Störungssignal von der Signalverarbeitungseinheit 15 an die Signalverarbeitungseinheit 15.1 des Rauchansaugsystems 7 geleitet und der Sauglüfter 8 und/oder das gesamte Rauchansaugsystem 7 ausgeschaltet wird. Dadurch kommt das angesaugte Luft-Staub-Gemisch, das hier mit Pfeilen gekennzeichnet ist, zum Stillstand.

Das Abschalten kann beispielsweise über den Schalter 5 oder andere Schaltelemente geschehen aber auch durch eine Brandmeldezentrale, welche ein Funksignal aus der Filterüberwachungseinheit 4 erhält (nicht dargestellt). Diese reagiert unverzögert mit der Abschaltung des Sauglüfters 8 und/oder des gesamten Rauchansaugsystems 7 und übermittelt den aktuellen Anlagenzustand an einen Prozessleitstand (nicht dargestellt).

Nach der Abschaltung kommt es nicht zum plötzlichen Stillstand des Sauglüfters 8 und des angesaugten Luft-Staub-Gemisches in der Saugrohrleitung 3. Es ist die Abschaltzeit bis zum Stillstand des Sauglüfters 8 zu berücksichtigen. Deshalb ist in dieser vorteilhaften Ausführung (Fig. 3) die Länge L des Abschnittes der Saugrohrleitung 3 zwischen dem Filter 2 und dem Rauchansaugsystem 7 so ausgelegt, dass keine zündfähige Atmosphäre während und nach dem Abschaltvorgang in das Rauchansaugsystem 7 gelangen kann. Die Länge L dieses Abschnittes der Saugrohrleitung 3 ist dabei abhängig von der Transportgeschwindigkeit des angesaugten Luft-Staub-Gemisches und der Zeitdauer bis die Transportgeschwindigkeit nahezu 0 m/s beträgt. Bei dieser ausgelegten Länge gelangt kein angesaugtes Luft-Staub-Gemisch in das Rauchansaugsystem 7.

Bei der beispielhaften Transportgeschwindigkeit in der Saugrohrleitung von 1 m/s und einer Abschaltzeit von 5 s, muss dieser Abschnitt der Saugrohrleitung 3 eine Länge L von 5 m aufweisen. Die Abschaltzeit ist die Zeitspanne vom Filterdefekt/Filterdurchbruch bis zum Stillstand des Transports des angesaugten Luft-Staub-Gemisches in der Saugrohrleitung 3. Hierbei wurde vorausgesetzt, dass der Störungsüberwachungssensor 14 direkt am Filter 2 positioniert ist. Wenn dieser Störungsüberwachungssensor 14 in einem Abstand zum Filter 2 positioniert ist, so verlängert sich die oben beschriebene Länge des Abschnittes L der Saugrohrleitung 3 um diesen Abstand. Die oben genannte beispielhafte Länge ist eine Abschätzung, welche eine konstante Geschwindigkeit bis zum Ende der Abschaltzeit, d.h. bis zum Stillstand des Sauglüfters annimmt. Bei genauerer Berechnung muss die Zeitabhängigkeit der Geschwindigkeit v(t) berücksichtigt werden.

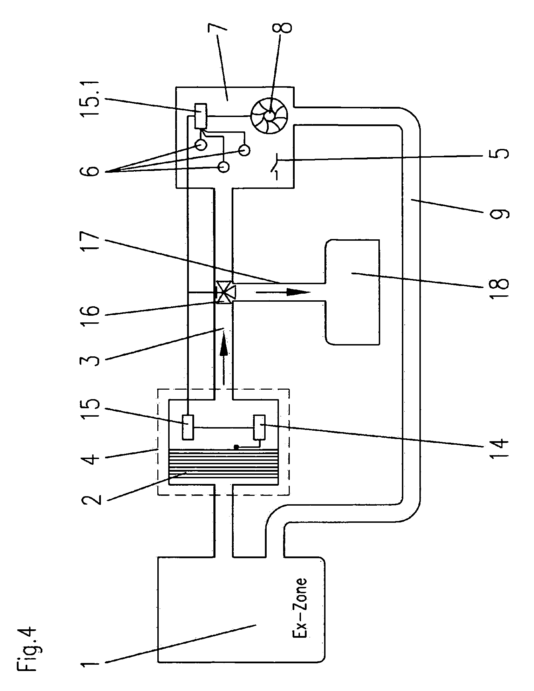

Eine weitere vorteilhafte Ausführung bezüglich der Folgeaktion ist in Fig. 4 dargestellt. Hier steuert das Störungssignal von der Signalverarbeitungseinheit 15 ein oder mehrere Klappen und/oder Ventile 16 an welche die Saugrohrleitung 3 in Richtung Rauchansaugsystem 7 verschließt und eine Bypassleitung 17 oder eine Notöffnung (nicht dargestellt) für das angesaugte Luft-Staub-Gemisch öffnet und dieses in einen Behälter 18 oder einfach in das Umgebungsvolumen umleitet. Diese Funktion kann durch zwei Klappen/Ventile 16 realisiert werden, oder wie in Fig. 4 dargestellt, durch ein kombiniertes Teil wie ein 3/2-Wege Ventil. Durch die Ansteuerung der Klappe/Ventil 16 wird ein Eindringen des angesaugten Luft-Staub-Gemisches in das Rauchsansaugsystem 7 verhindert.

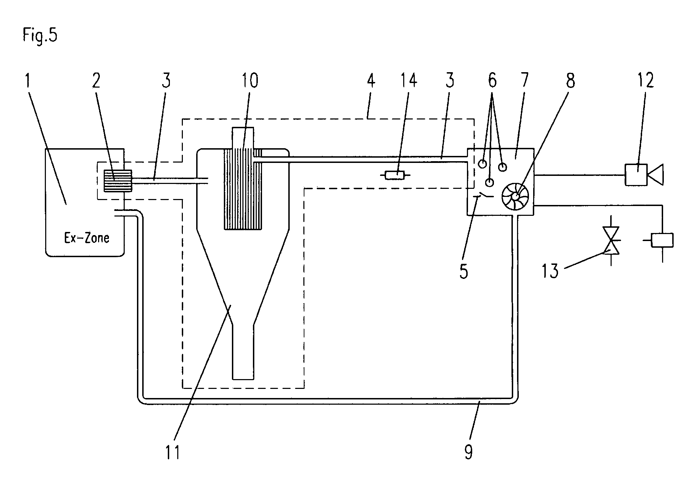

Die *Figur 5* zeigt eine Weiterentwicklung der *Vorrichtung* von Figur 1, bei der zwischen dem Lagerbereich 1 für brennbare Materialien und des Rauchansaugsystems 7 ein weiterer Filter 10 angeordnet ist, welcher mit einem Abscheider 11 verbunden ist. Hier wird das Filterüberwachungssystem um die zusätzlichen genannten Bauteile erweitert.

Nach dem Rauchansaugsystem 7 ist ein Alarmgerät 12, beispielsweise eine Sirene, Hupe oder eine Brandmeldezentrale angeordnet. Weiterhin ist zusätzlich zum Rauchansaugsystem 7 ein Löschmittelventil 13 mit einer zugehörigen Löschanlage angeordnet, welches eine vorteilhafte Ausführungsvariante dann darstellt, wenn bei Erkennen einer Brandkenngröße ein Löschvorgang im Lagerbereich 1 für brennbare Materialien stattfinden soll. Dieses Löschmittelventil 13 wird dann bei der Detektion eines Brandes direkt durch das Rauchansaugsystem 7 oder über eine Brandmelderzentrale zum Ausbringen des Löschmittels angesteuert.

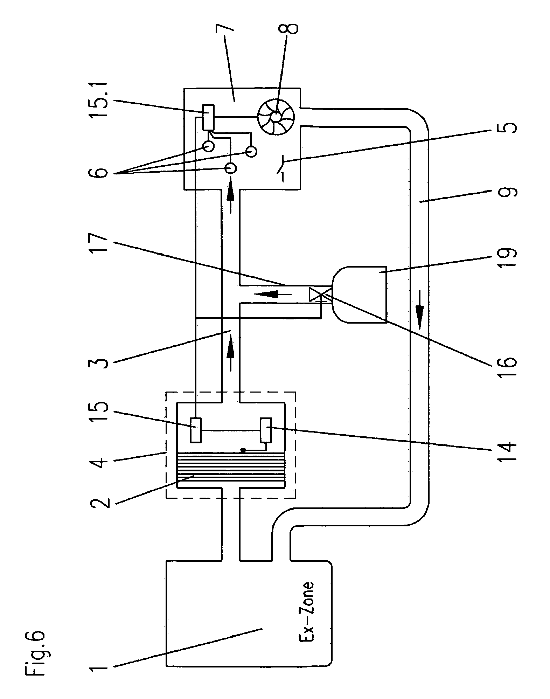

Eine weitere Ausführungsvariante der Vorrichtung von Figur 1 ist in Figur 6 dargestellt. In dieser Ausführung steuert das Signal des Störungsüberwachungssensors 14 über die Signalverarbeitungseinheit 15 eine Klappe und/oder ein Ventil 16 an. Dieses Ventil öffnet einen unter Druck stehender Vorratsbehälter 19 mit inertisierendem Gas, wie z.B. Stickstoff. Dieses wird dem angesaugten Luft-Staub-Gemisch zusätzlich beigemischt und senkt damit die Explosionsgrenze im Volumen des Rauchansaugsystems 7. Dadurch wird eine Weiterführung der Detektion von Brandkenngrößen ermöglicht.

Anstelle des inertisierenden Gases kann z.B. auch unbelastete Luft aus der Umgebung mit einer Pumpe zur Verdünnung des angesaugten Luft-Staub-Gemisches verwendet werden.

### Liste der verwendeten Bezugszeichen

1 Volumina mit Ex-Bereich,/Lager- und Transportbereich für brennbare Materialien mit Staubbildung
2 Filter
3 Saugrohrleitung
4 Filterüberwachungseinheit
5 Schalter/Schaltelement
6 Sensor zum Detektieren einer Brandkenngröße
7 Rauchansaugsystem
8 Sauglüfter
9 Luftstromrückführungsleitung
10 Filter B
11 Abscheider
12 Alarmgerät
13 Löschmittelventil
14 Störungsüberwachungssensor
15 Signalverarbeitungseinheit/Steuerungseinheit des Störungsüberwachungssensors (14)
15.1 Signalverarbeitungseinheit/Steuerungseinheit des Rauchansaugsystems (7)
16 Klappe/Ventil
17 Bypassleitung
18 Behälter
19 Vorratsbehälter mit inertisierendem Gas
L Länge der Saugrohrleitung (3)

## Patentansprüche

1. Verfahren zur Branddetektion in Volumina (1) die den Explosionsschutzanforderungen unterliegen, aus denen ein Luft-Staub-Gemisch gefiltert wird, wobei die Staubkonzentration des Luft-Staub-Gemisches mittels Filter (2) unter die Explosionsgrenze gesenkt und das abgesaugte Luft-Staub-Gemisch auf Brandkenngrößen überprüft und gegebenenfalls ein Brandalarm ausgelöst wird, **dadurch gekennzeichnet, dass**
■ die Funktion des Filters (2) überwacht wird,
■ die Branddetektion mit einem für den Einsatz in explosionsgefährdeten Bereichen nicht zugelassenen Rauchansaugsystem (7) außerhalb des Ex-Bereiches erfolgt und
■ bei Zerstörung des Filters (2) eine Signalverarbeitungseinheit (15, 15.1) eines Störungsüberwachungssensors (14) ein Signal erzeugt, welches eine Folgeaktion einleitet, die ein Eindringen des angesaugten Luft-Staub-Gemisches mit erhöhter Staubkonzentration in das Rauchansaugsystem (7) verhindert.

2. Verfahren nach Anspruch 1, **dadurch gekennzeichnet, dass** das Signal der Signalverarbeitungseinheit (15, 15.1) des Störungsüberwachungssensors (14) den Sauglüfter (8) und/oder das Rauchansaugsystem (7) abschaltet.

3. Verfahren nach einem der Ansprüche 1 und 2, **dadurch gekennzeichnet, dass** das Signal des Störungsüberwachungssensors (14)eine Klappe und/oder ein Ventil (16) ansteuert welches den Eintritt in des angesaugte Luft-Staub Gemisch in das Rauchansaugsystem (7) verhindert.

4. Verfahren nach Anspruch 1, **dadurch gekennzeichnet, dass** das Signal des Störungsüberwachungssensors (14) eine Klappe und/oder ein Ventil (16) ansteuert, welches ein zusätzliches Volumen von unbelasteter Luft oder Gas oder ein inertisiertes Gas freigibt und damit die Explosionsgrenze im Volumen des Rauchansaugsystems senkt, so dass eine Weiterführung der Detektion von Brandkenngrößen möglich ist.

5. Verfahren nach einem der Ansprüche 1 bis 4, **dadurch gekennzeichnet, dass** die Druckveränderung über dem Filter (2) oder die Staubkonzentration des Gasstromes als Störgrößenüberwachung herangezogen wird.

6. Verfahren nach einem der Ansprüche 1 bis 4, **dadurch gekennzeichnet, dass** die Staubkonzentration des Gasstromes mittels eines Durchlicht- und/oder Streulichtmesssystems überwacht wird.

7. Verfahren nach einem der Ansprüche 1 bis 4, **dadurch gekennzeichnet, dass** die Staubkonzentration des Gasstromes mittels eines Mikrowellensystems überwacht wird.

8. Verfahren nach Anspruch 1, **dadurch gekennzeichnet, dass** die Staubkonzentration des Gasstromes mittels einer Abscheidung separiert und der angefallene Staub gewogen oder dessen Volumen gemessen wird, so dass in Abhängigkeit des Luftstromes und der angefallenen Staubmenge pro Zeiteinheit die Überwachung des Filtersystems erfolgt.

9. Vorrichtung zur Branddetektion in Volumina (1), die den Explosionsschutzanforderungen unterliegen, aus denen ein Luft-Staub-Gemisch abgesaugt, gefiltert, auf brandtypische Kriterien überprüft und gegebenenfalls ein Brandsignal ausgelöst wird, bestehend aus
- einem Rauchansaugsystem (7), welches keine Ex-Zulassung hat und außerhalb des Ex-Bereiches angeordnet ist,
- einer Saugrohrleitung (3) zwischen dem Filter (2) und dem Rauchansaugsystem (7), wobei der Filter (2) die Staubbelastung des angesaugten Luft-Staub-Gemisches aus dem Lagerbereich (1) unter die Explosionsgrenze senkt,
- einer Filterüberwachungseinheit (4) mit einem Störungsüberwachungssensor (14) und
- einer Signalverarbeitungseinheit (15, 15.1), welche die Signale des Störungsüberwachungssensor (14) verarbeitet und bei Zerstörung des Filters (2) ein Störungssignal erzeugt, welches Folgeaktionen einleitet, die ein Eindringen des angesaugten Luft-Staub-Gemisches mit erhöhter Staubkonzentration in das Rauchansaugsystem (7) verhindert.

10. Vorrichtung nach Anspruch 9, **dadurch gekennzeichnet, dass** die Signalverarbeitungseinheit (15, 15.1) für die Filterüberwachungseinheit (4) und/oder für das Rauchansaugsystem (7) angeordnet ist.

11. Vorrichtung nach Anspruch 10 **dadurch gekennzeichnet, dass** die Signalverarbeitungseinheit (15) der Filterüberwachungseinheit (4) autark vom Rauchansaugsystem (7) arbeitet und das Störungssignal an die Signalverarbeitungseinheit (15.1) des Rauchansaugsystems (7) sendet, welche den Sauglüfter (8) und/oder das gesamte Rauchansaugsystem (7) ausschaltet.

12. Vorrichtung nach Anspruch 10, **dadurch gekennzeichnet, dass** die Signalverarbeitungseinheit (15.1) des Rauchansaugsystems (7) die Signale des Störungsüberwachungssensor (14) verarbeitet und den Sauglüfter (8) und/oder das Rauchansaugsystem (7) bei Zerstörung des Filters (2) ausschaltet.

13. Vorrichtung nach einem der Ansprüchen 9 bis 12, **dadurch gekennzeichnet, dass** die Saugrohrleitung (3) zwischen dem Filter (2) und dem Eintritt in das Rauchansaugsystem (7) so bemessen ist, dass die Transportgeschwindigkeit des angesaugten Luft-Staub-Gemisches in der Saugrohrleitung (3) vor Eintritt in das Rauchansaugsystem (7) auf Null m/s reduziert wird.

14. Vorrichtung nach einem der Anspruch 9 bis 13, **dadurch gekennzeichnet, dass** vor dem Rauchansaugsystem (7) eine Klappe und/oder Ventil (16)angeordnet sind, welches ein Eindringen des angesaugten Luft-Staub-Gemisches mit erhöhter Staubkonzentration in das Rauchansaugsystem (7) verhindert.

15. Vorrichtung nach einem der Ansprüche 9 bis 14, **dadurch gekennzeichnet, dass** nach dem Filter (2) eine ansteuerbare Klappe und/oder ein Ventil (16) für eine Zuleitung von unbelasteter Luft oder Gas oder einem inertisierenden Gas angeordnet ist, das dem Luft-Staub-Gemisch in der Saugrohrleitung (3) zugemischt wird.

## Claims

1. A method for fire detection in volumes (1) which are subject to explosion protection requirements, from which an air/dust mixture is filtered, the dust concentration of the air/dust mixture being lowered by means of filters (2) below the explosive limit and the aspirated air/dust mixture being checked for fire parameters and a fire alarm being triggered if necessary, **characterized in that**
■ the functioning of the filter (2) is monitored,
■ fire detection occurs outside the ex-area with a smoke aspiration system (7) which is not authorized for use in areas exposed to explosion hazards and
■ in case of a destruction of the filter (2) a signal processing unit (15, 15.1) of a malfunction monitoring sensor (14) generates a signal, which initiates a follow-up action, which prevents a penetration of the aspirated air/dust mixture with an increased dust concentration into the smoke aspiration system (7).

2. The method according to claim 1, **characterized in that** the signal of the signal processing unit (15, 15.1) of the malfunction monitoring sensor (14) shuts down the extractor fan (8) and/or the smoke aspirating system (7).

3. The method according to one of the claims 1 or 2, **characterized in that** the signal of the malfunction monitoring sensor (14) activates a flap and/or a valve (16), which prevents the entry of the aspirated air/dust mixture into the smoke aspiration system (7).

4. The method according to claim 1, **characterized in that** the signal of the malfunction monitoring sensor (14) activates a flap and/or a valve (16), which releases an additional volume of unloaded air or gas or an inert gas and thus lowers the explosive limit in the volume of the smoke aspiration system , so that a continuation of the detection of fire parameters is possible.

5. The method according to one of the claims 1 to 4, **characterized in that** the pressure change above the filter (2) or the dust concentration of the gas flow is used for disturbance value monitoring.

6. The method according to one of the claims 1 to 4, **characterized in that** the dust concentration of the gas flow is monitored by means of a transmitted light and/or a scattered light measuring system.

7. The method according to one of the claims 1 to 4, **characterized in that** the dust concentration of the gas flow is monitored by means of a microwave system.

8. The method according to claim 1, **characterized in that** the dust concentration of the gas flow is separated by means of deposition and the accrued dust is weighed or its volume measured, so that monitoring of the filter system occurs depending on the air flow and the accrued amount of dust per time unit.

9. A device for fire detection in volumes (1) which are subject to explosion protection requirements, from which an air/dust mixture is aspirated, filtered, checked for criteria that are characteristic of fire and a fire signal is triggered if necessary, consisting of
- a smoke aspiration system (7) which does not have an Ex authorization and is disposed outside of the Ex-area,
- a suction pipeline (3) between the filter (2) and the smoke aspiration system (7), the filter (2) lowering the dust load of the air/dust mixture aspirated from the storage area (1) below the explosive limit,
- a filter monitoring unit (4) with a malfunction monitoring sensor (14) and
- a signal processing unit (15, 15.1), which processes the signals of the malfunction monitoring sensor (14) and, in case of a destruction of the filter (2), generates a signal, which initiates a follow-up action that prevents a penetration of the aspirated air/dust mixture with an increased dust concentration into the smoke aspiration system (7).

10. The device according to claim 9, **characterized in that** the signal processing unit (15, 15.1) is disposed for the filter monitoring unit (4) and/or for the smoke aspiration system (7).

11. The device according to claim 10, **characterized in that** the signal processing unit (15) of the filter monitoring unit (14) operates autarkically from the smoke aspiration system (7) and sends the malfunction signal to the signal processing unit (15.1) of the smoke aspiration system (7), which shuts down the extractor fan (8) and/or the entire smoke aspiration system (7).

12. The device according to claim 10, **characterized in that** the signal processing unit (15.1) of the smoke aspiration system (7) processes the signals of the malfunction monitoring sensor (14) and, in case of a destruction of the filter (2), shuts down the extractor fan (8) and/or the smoke aspiration system (7).

13. The device according to one of the claims 9 to 12, **characterized in that** the suction pipeline (3) between the filter (2) and the admission into the smoke aspiration system (7) is dimensioned in such a manner that the transport speed of the aspirated air/dust mixture in the suction pipeline (3) is reduced to zero m/s before entry into the smoke aspiration system (7).

14. The device according to one of the claims 9 to 13, **characterized in that** a flap and/or a valve (16) is disposed in front of the smoke aspiration system (7), which prevents a penetration of the aspirated air/dust mixture with an increased dust concentration into the smoke aspiration system (7).

15. The device according to one of the claims 9 to 14, **characterized in that** a flap and/or a valve (16) that is capable of being activated is disposed after the filter (2) for supplying unloaded air or gas or an inert gas, which is added to the air/dust mixture in the suction pipeline (3).

## Revendications

1. Méthode pour la détection d'incendie dans des volumes (1) soumis aux exigences de protection incendie, depuis lesquels un mélange air/poussière est filtré, la concentration en poussière du mélange air/poussière étant abaissée au moyen de filtres (2) en-dessous de la limite d'explosivité et le mélange air/poussière aspiré est contrôlé par rapport à des grandeurs caractéristiques d'incendie et une alarme incendie est déclenchée le cas échéant, **caractérisée en ce que**
■ l'action du filtre (2) est surveillée,
■ la détection d'incendie s'effectue en dehors de la zone Ex au moyen d'un système d'aspiration de fumée (7) non autorisé pour l'utilisation dans des atmosphères explosibles
■ en cas de destruction du filtre (2), une unité de traitement de signal (15, 15.1) d'un capteur de surveillance de dysfonctionnements (14) génère un signal qui déclenche une action consécutive qui empêche la pénétration. du mélange air/poussière aspiré avec une concentration en poussière accrue dans le système d'aspiration de fumée (7).

2. Méthode selon la revendication 1, **caractérisée en ce que** le signal de l'unité de traitement de signal (15, 15.1) du capteur de surveillance de dysfonctionnements (14) arrête le ventilateur d'extraction (8) et/ou le système d'aspiration de fumée (7).

3. Méthode selon l'une des revendications 1 et 2, **caractérisée en ce que** le signal du capteur de surveillance de dysfonctionnements (14) active un clapet et/ou une valve (16) qui empêche la pénétration du mélange air/poussière aspiré dans le système d'aspiration de fumée (7).

4. Méthode selon la revendication 1, **caractérisée en ce que** le signal du capteur de surveillance de dysfonctionnements (14) active un clapet et/ou une valve (16), qui libère un volume additionnel d'air ou de gaz non chargé ou un gaz inerte et ainsi abaisse la limite d'explosivité dans le volume du système d'aspiration de fumée, de sorte qu'une continuation de la détection de grandeurs caractéristiques d'incendie est possible.

5. Méthode selon l'une des revendications 1 à 4, **caractérisée en ce que** le changement de pression au-dessus du filtre (2) ou la concentration en poussière du flux de gaz est utilisé pour la surveillance de variables perturbatrices.

6. Méthode selon l'une des revendications 1 à 4, **caractérisée en ce que** la concentration en poussière du flux de gaz est surveillée au moyen d'un système de mesure de lumière diffuse ou transmise.

7. Méthode selon l'une des revendications 1 à 4, **caractérisée en ce que** la concentration en poussière du flux de gaz est surveillée au moyen d'un système à micro-ondes.

8. Méthode selon la revendication 1, **caractérisée en ce que** la concentration en poussière du flux de gaz est séparée au moyen d'un piégeage et la poussière accumulée est pesée ou son volume mesuré, de sorte que la surveillance du système de filtre s'effectue en fonction du flux d'air et de la quantité de poussière accumulée par unité de temps.

9. Dispositif pour la détection incendie dans des volumes (1) soumis aux exigences de protection incendie, depuis lesquels un mélange air/poussière est aspiré, filtré, contrôlé par rapport à des critères caractéristiques d'un incendie et un signal d'alarme incendie est déclenché le cas échéant, consistant en
- un système d'aspiration de fumée (7) qui n'a pas d'autorisation Ex et est disposé en dehors de la zone Ex,
- un conduit d'aspiration (3) entre le filtre (2) et le système d'aspiration de fumée (7), le filtre (2) abaissant la charge de poussière du mélange air/poussière aspiré depuis l'espace d'entrepôt (1) sous la limite d'explosivité,
- une unité de surveillance de filtre (2) avec un capteur de surveillance de dysfonctionnements (14) et
- une unité de traitement de signal (15, 15.1) qui traite les signaux du capteur de surveillance de dysfonctionnements (14) et, en cas de destruction du filtre (2), génère un signal de dysfonctionnement qui déclenche des actions consécutives qui empêchent une pénétration du mélange air/poussière aspiré avec une concentration en poussière accrue dans le système d'aspiration de fumée (7)

10. Dispositif selon la revendication 9, **caractérisé en ce que** l'unité de traitement de signal (15, 15.1) est disposée pour l'unité de surveillance du filtre (4) et/ou pour le système d'aspiration de fumée (7).

11. Dispositif selon la revendication 10, **caractérisé en ce que** l'unité de traitement de signal (15) de l'unité de surveillance de filtre (4) fonctionne en autarcie par rapport au système d'aspiration de fumée (7) et envoie le signal de dysfonctionnement à l'unité de traitement de signal (15.1) du système d'aspiration de fumée (7) qui arrête le ventilateur d'extraction (8) et/ou le système d'aspiration de fumée (7) dans son ensemble.

12. Dispositif selon la revendication 10, **caractérisé en ce que** l'unité de traitement de signal (15.1) du système d'aspiration de fumée (7) traite les signaux du capteur de surveillance de dysfonctionnements (14) et, en cas de destruction du filtre (2), arrête le ventilateur d'extraction (8) et/ou le système d'aspiration de fumée (7).

13. Dispositif selon l'une des revendications 9 à 12, **caractérisé en ce que** le conduit d'aspiration (3) entre le filtre (2) et l'entrée du système d'aspiration de fumée (7) est dimensionné de telle manière que la vitesse de transport du mélange air/poussière aspiré dans le conduit d'aspiration (3) est réduite à zéro m/s avant son entrée dans le système d'aspiration de fumée (7).

14. Dispositif selon l'une des revendications 9 à 13, **caractérisé en ce que** sont disposés en amont du système d'aspiration de fumée (7) un clapet et/ou une valve (16), qui empêchent une pénétration du mélange air/poussière aspiré avec une concentration en poussière accrue dans le système d'aspiration de fumée (7).

15. Dispositif selon l'une des revendications 9 à 14, **caractérisé en ce qu'**un clapet et/ou une valve (16) activable est disposée en aval du filtre (2) pour l'arrivée d'air ou de gaz non chargé ou d'un gaz inerte qui est ajouté au mélange air/poussière dans le conduit d'aspiration (3).
